# EUROPEAN PATENT SPECIFICATION

(11) **EP 3 686 984 B1**
(45) Date of publication and mention of the grant of the patent: **12.06.2024**
(21) Application number: 18868925.1
(22) Date of filing: 14.09.2018
(51) Int. Cl.: H01M 10/0568, H01G 11/06, H01G 11/30, H01G 11/62, H01M 4/13, H01M 4/139, H01M 4/62, H01M 4/66, H01M 10/0569, H01M 10/058, H01M 4/1391, H01M 4/36, H01M 4/525, H01M 10/052, H01M 4/02

(54) **NONAQUEOUS ELECTROLYTE STORAGE ELEMENT AND METHOD FOR PRODUCING NONAQUEOUS ELECTROLYTE STORAGE ELEMENT**
SPEICHERELEMENT MIT WASSERFREIEM ELEKTROLYT UND VERFAHREN ZUR HERSTELLUNG EINES SPEICHERELEMENTS MIT WASSERFREIEM ELEKTROLYT
ÉLÉMENT D'ACCUMULATION À ÉLECTROLYTE NON AQUEUX ET PROCÉDÉ DE PRODUCTION D'ÉLÉMENT D'ACCUMULATION À ÉLECTROLYTE NON AQUEUX

(30) Priority: 20.10.2017 JP 2017203397
(43) Date of publication of application: 29.07.2020
(73) Proprietor: GS Yuasa International Ltd., Kyoto-shi, Kyoto 601-8520 (JP)
(72) Inventor: TAKAHASHI, Katsuyuki, Kyoto-shi Kyoto 601-8520 (JP); KIKUCHI, Akifumi, Kyoto-shi Kyoto 601-8520 (JP)
(74) Representative: Isarpatent
(86) International application number: PCT/JP2018/034206
(87) International publication number: WO 2019/077919

(56) References cited:
- WO-A1-2007/139130
- WO-A1-2017/099201
- WO-A1-2017/099201
- JP-A- 2007 220 335
- JP-A- 2009 087 885
- JP-A- 2011 070 773
- JP-A- 2013 152 825
- JP-A- 2014 022 291
- JP-A- 2015 079 636
- JP-A- 2015 079 636
- JP-A- 2017 091 993

## Description

### TECHNICAL FIELD

The present invention relates to a nonaqueous electrolyte energy storage device and a method for manufacturing a nonaqueous electrolyte energy storage device.

### BACKGROUND ART

A nonaqueous electrolyte secondary battery typified by a lithium ion secondary battery is often used in an electronic device such as a personal computer and a communication terminal, an automobile and others due to the high energy density thereof. In general, the nonaqueous electrolyte secondary battery is equipped with a pair of electrodes that are electrically separated from each other through a separator and a nonaqueous electrolyte arranged between the electrodes, and is configured so as to be charged and discharged through the acceptance and reception of ions between the electrodes. As a nonaqueous electrolyte energy storage device other than the nonaqueous electrolyte secondary battery, a capacitor such as a lithium ion capacitor and an electric double-layer capacitor has also been widely used.

As one type of electrolyte salt to be used in a nonaqueous electrolyte, an imide salt such as lithium bis(fluorosulfonyl)imide (LiFSI) is known. An imide salt has higher dissociability between a cation and an anion compared with LiPF₆ and the like which have been widely used as electrolyte salts. Therefore, a nonaqueous electrolyte energy storage device in which an imide salt is used is expected to have good high-rate-discharge performance under lower temperatures and others. However, it is known that, when an imide salt is used as an electrolyte salt, the oxidation and corrosion of aluminum that is used as, for example, a positive electrode base material in a nonaqueous electrolyte energy storage device may occur as the result of such a charge-discharge procedure that the operation potential of a positive electrode becomes 4.0 V (vs. Li/Li⁺) or more and consequently the charge-discharge performance may be deteriorated. In contrast, it is reported that the occurrence of the oxidation/corrosion of aluminum upon such charge-discharge that the operation potential of a positive electrode becomes 4.0 V (vs. Li/Li⁺) or more can be prevented by using an imide salt at a high concentration (see Patent Document 1, Abstract in Non-Patent Document 1). With respect to the specific concentration of an imide salt at which this preventive effect can be achieved, there is a statement "in the case where the voltage is 4.5 V, the corrosion is not observed when LiFSI is used at a concentration of 1.5 mol/L or more; while in the case where the voltage is as high as 4.9 V, the corrosion is not observed when LiFSI is used at a concentration of 4 mol/L" in paragraph[0012] in Patent Document 1, for example.

### PRIOR ART DOCUMENTS

### PATENT DOCUMENT

Patent Document 1: JP-A-2015-79636

### NON-PATENT DOCUMENT

Non-Patent Document 1: Jianhui Wang et. al., "Superconcentrated electrolytes for a high-voltage lithium-ion battery", Nature Communications, 2016, 7:12032 doi:10.1038/ncomms12032

### SUMMARY OF THE INVENTION

### PROBLEMS TO BE SOLVED BY THE INVENTION

In a nonaqueous electrolyte energy storage device, in the case where an imide salt such as LiN(SO₂F)₂(LiFSI), LiN(C₂F₅SO₂)₂(LiBETI) and LiN(CF₃SO₂)₂(LiTFSI) is used as an electrolyte salt at a commonly employed concentration of about 1 mol/kg, the oxidation and corrosion of aluminum can occur easily when a positive electrode exhibits an operation potential of 4.0 V (vs. Li/Li⁺) or more. The occurrence of oxidation/corrosion of aluminum is not desirable, because the internal resistance is greatly increased in association with a charge-discharge cycle. On the other hand, the oxidation/corrosion of aluminum can be prevented by using a nonaqueous electrolyte containing an imide salt at a high concentration. In this case, the viscosity of the nonaqueous electrolyte increases and the internal resistance also increases. The increase in the viscosity of the nonaqueous electrolyte is not desirable, because good high-rate-discharge performance of a nonaqueous electrolyte energy storage device including the imide salt under lower temperatures, which is one of advantages of the use of the imide salt, or the like may be deteriorated.

The present invention has been made in the above-mentioned situations. The object of the present invention is to provide: a nonaqueous electrolyte energy storage device which is free from the problem that the internal resistance after a charge-discharge cycle is greatly increased when an imide salt is used as an electrolyte salt at a concentration falling within a range that is not deemed as a high concentration range; and a method for manufacturing the nonaqueous electrolyte energy storage device.

### MEANS FOR SOLVING THE PROBLEMS

One aspect of the present invention which has been made for the purpose of solving the above-mentioned problems is a nonaqueous electrolyte energy storage device including: a positive electrode including a positive electrode mix containing a phosphorus atom; and
a nonaqueous electrolyte containing an imide salt,
wherein a peak attributed to P2p appears at a position corresponding to 135 eV or less in an X-ray photoelectron spectroscopic spectrum of the positive electrode mix.

Another aspect of the present invention is a method for manufacturing a nonaqueous electrolyte energy storage device including:
a positive electrode including a positive electrode mix produced using a positive electrode mix paste containing an oxoacid of phosphorus; and
a nonaqueous electrolyte containing an imide salt.

### ADVANTAGES OF THE INVENTION

According to the present invention, it is possible to provide: a nonaqueous electrolyte energy storage device which addresses the problem that, when an imide salt is used as an electrolyte salt at a concentration falling within a range that is not deemed as a high concentration range, the internal resistance after a charge-discharge cycle is greatly increased; and a method for manufacturing the nonaqueous electrolyte energy storage device.

### BRIEF DESCRIPTION OF THE DRAWINGS

Fig. 1 is an appearance perspective view illustrating a nonaqueous electrolyte energy storage device according to one embodiment of the present invention.
Fig. 2 is a schematic view of an energy storage apparatus composed of an assembly of a plurality of nonaqueous electrolyte energy storage devices according to one embodiment of the present invention.

### MODE FOR CARRYING OUT THE INVENTION

The nonaqueous electrolyte energy storage device according to one embodiment of the present invention includes: a positive electrode including a positive electrode mix containing a phosphorus atom; and
a nonaqueous electrolyte containing an imide salt,
wherein a peak attributed to P2p appears at a position corresponding to 135 eV or less in an X-ray photoelectron spectroscopic spectrum of the positive electrode mix.

According to the nonaqueous electrolyte energy storage device, it becomes possible to prevent the oxidation/corrosion of aluminum and to prevent the increase in the internal resistance after a charge-discharge cycle even when the concentration of an imide salt in a nonaqueous electrolyte is not increased. In the nonaqueous electrolyte energy storage device, the reason why the above-mentioned advantageous effects can produced is unclear, but the following reasons are assumed. When a positive electrode mix is formed using a positive electrode mix paste containing an oxoacid of phosphorus, a coating film is formed which contains a component having such a property that a peak attributed to P2p appears at a position corresponding to 135 eV or less in an X-ray photoelectron spectroscopic spectrum coming from the oxoacid of phosphorus. It is assumed that the coating film can prevent the oxidation/corrosion of aluminum that serves as a positive electrode base material or the like and consequently the internal resistance cannot be increased and the increase in the internal resistance after a charge-discharge cycle can be prevented. The reason for these phenomena is unclear. However, the effect that the increase in the internal resistance after a charge-discharge cycle can be prevented is a special effect that can be achieved only when an imide salt is used as an electrolyte salt and a positive electrode mix having such a property that a peak attributed to P2p appears at a position corresponding to 135 eV or less in the X-ray photoelectron spectroscopic spectrum is used. According to the nonaqueous electrolyte energy storage device, the capacity retention rate after a charge-discharge cycle can also be increased. The reason when the capacity retention rate is increased is also unclear. However, it is assumed to be because a coating film containing a component having such a property that a peak attributed to P2p appears at a position corresponding to 135 eV or less in the X-ray photoelectron spectroscopic spectrum can also prevent the oxidation/corrosion of aluminum. According to the nonaqueous electrolyte energy storage device, it becomes possible, for example, to prevent the increase in the internal resistance after a charge-discharge cycle even when the concentration of the imide salt is not increased as mentioned above. Therefore, the nonaqueous electrolyte energy storage device can improve the disadvantages, e.g., high viscosity and high internal resistance, of a conventional nonaqueous electrolyte energy storage device including an imide salt at a high concentration, and can be used suitably even when the nonaqueous electrolyte energy storage device is so designed as to contain the imide salt at a concentration falling within a range that does not deemed as a high concentration range.

A sample (a positive electrode mix) to be used in the measurement of an X-ray photoelectron spectroscopic spectrum can be prepared in the following manner. A nonaqueous electrolyte energy storage device is discharged at a current of 0.1 C to an end-of-discharge voltage employed in the conventional use to make the nonaqueous electrolyte energy storage device in a completely discharged state. The energy storage device in the completely discharged state is broken down to remove a positive electrode, and the positive electrode is fully washed with dimethyl carbonate and is then dried under reduced pressure at room temperature. The dried positive electrode is cut into a predetermined size (e.g., 2 × 2 cm), and is used as a sample for the measurement of an X-ray photoelectron spectroscopic spectrum. The operations from the breaking down of the nonaqueous electrolyte energy storage device to the preparation of the sample to be used in the measurement of an X-ray photoelectron spectroscopic spectrum are carried out in an argon atmosphere at a dew point of -60°C or lower, and the produced sample was enclosed in a transfer vessel, is then held in an argon atmosphere at a dew point of -60°C or lower and is then introduced into a sample chamber in an X-ray photoelectron spectroscopic spectrum measurement device. The device and the measurement conditions to be employed in the measurement of an X-ray photoelectron spectroscopic spectrum are as follows.
Device: "AXIS NOVA" manufactured by KRATOS ANALYTICAL
X-Ray source: monochromatized AlKα
Acceleration voltage: 15 kV
Area to be analyzed: 700 pm × 300 pm
Measurement range: P2p = 145 to 128 eV, C1s = 300 to 272 eV
Measurement interval: 0.1 eV
Measurement time: P2p = 72.3 seconds/round, C1s = 70.0 seconds/round
Frequency of integration: P2p = 15 times, C1s = 8 times

The position of a peak in the spectrum is a value determined in the following manner. Firstly, the position of a peak of C1s which is attributed to sp2 carbon is defined as 284.8 eV, and the binding energies of all of the obtained spectra are corrected on the basis of this definition. Next, a background is removed from each of the corrected spectra by a straight line method. In this manner, a leveling processing of the spectra is carried out. A binding energy at which the intensity of a peak attributed to P2p becomes highest in the spectra obtained after the leveling processing is defined as the position of a peak attributed to P2p.

In the nonaqueous electrolyte energy storage device, it is preferred that the content of the imide salt in the nonaqueous electrolyte is 0.5 mol/kg or more and 2 mol/kg or less. According to the nonaqueous electrolyte energy storage device, the oxidation/corrosion of aluminum can be prevented even when the imide salt is used at a concentration falling within the above-mentioned range that is not deemed as a high concentration range. Therefore, in the nonaqueous electrolyte energy storage device, it is not needed to use the imide salt at a high concentration. In general, when an imide salt is used at a high concentration, the viscosity is increased and the internal resistance is also increased. In contrast, in the nonaqueous electrolyte energy storage device, when the concentration of the imide salt in the nonaqueous electrolyte falls within a range that is not deemed as a high concentration range like the above-mentioned range, the internal resistance is not increased and the increase in the internal resistance after a charge-discharge cycle can be prevented. Furthermore, the viscosity of a nonaqueous electrolyte containing the imide salt at a concentration falling within the above-mentioned range that does not deemed as a high concentration range is small. Therefore, it is expected that the high-rate-discharge performance at a lower temperature and the like can be improved.

In the nonaqueous electrolyte energy storage device, the maximum reached potential of the positive electrode is preferably 4.4 V (vs. Li/Li⁺) or more, more preferably 4.5 V (vs. Li/Li⁺) or more, still more preferably 4.6 V (vs. Li/Li⁺) or more. According to the nonaqueous electrolyte energy storage device, even in such charge-discharge that the maximum reached potential of the positive electrode at which the oxidation/corrosion of aluminum is likely to be caused remarkably when the imide salt is used becomes 4.4 V (vs. Li/Li⁺) or more, it becomes generally possible to decrease the internal resistance after a charge-discharge cycle. Therefore, when the maximum reached potential of the positive electrode is adjusted to 4.4 V (vs. Li/Li⁺) or more, the capacity can be increased by the charge/discharge of the positive electrode at an operation potential of 4.4 V (vs. Li/Li⁺) or more while preventing the increase in the internal resistance after a charge-discharge cycle.

The method for manufacturing the nonaqueous electrolyte energy storage device according to one embodiment of the present invention is a method for manufacturing a nonaqueous electrolyte energy storage device including a positive electrode which includes a positive electrode mix prepared using a positive electrode mix paste containing an oxoacid of phosphorus and a nonaqueous electrolyte containing an imide salt.

When a positive electrode mix paste containing an oxoacid of phosphorus is used, a positive electrode mix having such a property that a peak attributed to P2p appears at a position corresponding to 135 eV or less in an X-ray photoelectron spectroscopic spectrum of the positive electrode mix can be produced. Therefore, according to the manufacture method, even when the imide salt is used at a concentration falling within a range that cannot be deemed as a high concentration range, it becomes possible to manufacture a nonaqueous electrolyte energy storage device having such a property that the increased in the internal resistance after a charge-discharge cycle can be prevented.

Hereinbelow, the nonaqueous electrolyte energy storage device according to one embodiment of the present invention and the method for manufacturing the nonaqueous electrolyte energy storage device will be described in detail.

### <Nonaqueous electrolyte energy storage device>

The nonaqueous electrolyte energy storage device according to one embodiment of the present invention includes a positive electrode, a negative electrode and a nonaqueous electrolyte. Hereinbelow, a nonaqueous electrolyte secondary battery will be described as one example of the nonaqueous electrolyte energy storage device. The positive electrode and the negative electrode are commonly laminated or wound with a separator interposed therebetween to form an electrode assembly in which the positive electrode and the negative electrode are superposed alternately. The electrode assembly is enclosed in a container, and then the nonaqueous electrolyte is filled in the container. The nonaqueous electrolyte is arranged between the positive electrode and the negative electrode. As the container, a known metallic container" a known resin container or the like which is commonly used as a container for a nonaqueous electrolyte secondary battery can be used.

### (Positive electrode)

The positive electrode includes a positive electrode base material and a positive electrode mix layer arranged on the positive electrode base material directly or with an intermediate layer interposed therebetween.

The positive electrode base material has electric conductivity. As the material for the base material, a metal such as aluminum, titanium, tantalum and stainless steel or an alloy of the metal can be used. Among these materials, aluminum and an aluminum alloy are preferred from the viewpoint of the balance between the level of electric conductivity and cost. In the case where the positive electrode base material is made from aluminum or an aluminum alloy, the effect that the increase in the internal resistance of the nonaqueous electrolyte energy storage device after a charge-discharge cycle, which is assumed to be mainly caused by the oxidation/corrosion of aluminum, can be prevented can be achieved more satisfactorily. Examples of the type of the positive electrode base material to be formed include a foil and a vapor-deposited film, and a foil is preferred from the viewpoint of cost. Namely, as the positive electrode base material, an aluminum foil is preferred. Examples of aluminum or the aluminum alloy include A1085P and A3003P which are prescribed in JIS-H-4000 (2014).

The intermediate layer is a layer coating the surface of the positive electrode base material, and contains electrically conductive particles such as carbon particles and therefore can reduce the contact resistance between the positive electrode base material and the positive electrode mix layer. The constitution of the intermediate layer is not particularly limited, and the intermediate layer can be formed from, for example, a composition containing a resin binder and electrically conductive particles. The term "electrical conductivity" or "conductivity" as used herein refers to the matter that the volume resistivity as measured in accordance with JIS-H-0505 (1975) is 10⁷ Ω•cm or less, and the term "electrical non-conductivity" or "non-conductivity" as used herein refers to the matter that the volume resistivity is more than 10⁷ Ω•cm.

The positive electrode mix layer is a layer formed from a positive electrode mix. The positive electrode mix contains a positive active material and a phosphorus atom, and may optionally further contain an optional component such as a conductive agent, a binder, a thickening agent, a filler and a dispersing agent. In an X-ray photoelectron spectroscopic spectrum of the positive electrode mix, a peak attributed to P2p appears at a position corresponding to 135 eV or less. The positive electrode mix layer is generally formed on the surface of the positive electrode base material by applying a positive electrode mix paste containing a positive active material, an oxoacid of phosphorus and the like and then drying the paste. In the nonaqueous electrolyte energy storage device, the oxoacid of phosphorus may be modified partly or entirely. It is assumed that the phosphorus atom is present in a coating film formed on the surface of the positive electrode mix. Namely, it is assumed that, when a phosphorus atom coming from the oxoacid of phosphorus is present in a coating film formed on the surface of the positive electrode mix, a peak attributed to P2p can appear at a position corresponding to 135 eV or less in an X-ray photoelectron spectroscopic spectrum of the positive electrode mix.

Examples of the positive active material include a lithium-(transition metal) composite oxide and a polyanion compound. Examples of the lithium-(transition metal) composite oxide include composite oxides each represented by LiₓMO_{y} (wherein M represents at least one transition metal) (e.g., LiₓCoO₂, LiₓNiO₂, LiₓMnO₃, LiₓNiαCo(₁₋α₎O₂, LiₓNiαCoβAl₍₁₋α-β₎O₂, LiₓNiαMnβCo₍₁₋α-β₎O₂ and Li₁₊ₓ(NiαMnβCo₍₁₋α-β₎)₁₋ₓO₂ each having a layered α-NaFeO₂-type crystal structure; and LiₓMn₂O₄ and LiₓNiαMn₍₂₋α₎O₄ each having a spinel-type crystal structure). An example of the polyanion compound is a polyanion compound represented by Li_{w}Meₓ(XO_{y})_{z} (wherein Me represents at least one transition metal; and X represents, for example, P, Si, B, V or the like), (e.g., LiFePO₄, LiMnPO₄, LiNiPO₄, LiCoPO₄, Li₃V₂(PO₄)₃, Li₂MnSiO₄, and Li₂CoPO₄F). Some of all of the elements or the polyanions in these compounds may be substituted by another elements or anion species. In the positive electrode mix layer, these compounds may be used singly, or a mixture of two or more of these compounds may be used.

It is preferred that the positive active material includes a positive active material having such a property that the positive electrode potential can become higher than 4.0 V (vs. Li/Li⁺) at an end-of-charge potential employed in the common use of a nonaqueous electrolyte energy storage device. As the positive active material, a lithium-(transition metal) composite oxide is preferred. The nonaqueous electrolyte energy storage device can be prevented from the increase in the internal resistance after a charge-discharge cycle even when used under the condition where the maximum reached potential of the positive electrode becomes higher than 4.0 V (vs. Li/Li⁺). Therefore, when a positive active material having such a property that the positive electrode operation potential can become 4.0 V (vs. Li/Li⁺) or more is used, it becomes possible to manufacture a nonaqueous electrolyte energy storage device in which the energy density can be increased and the increase in the internal resistance after a charge-discharge cycle can be prevented. The term "common use" as used herein refers to the case where the nonaqueous electrolyte energy storage device is used by employing charge-discharge conditions that are recommended or designated for the nonaqueous electrolyte energy storage device. With respect to the charge conditions, in the case where a charger for the nonaqueous electrolyte energy storage device is provided, the term "common use" refers to a case where the nonaqueous electrolyte energy storage device is used through the application of the charger.

The lower limit of the content ratio of the lithium-(transition metal) composite oxide relative to the whole amount of the positive active material is preferably 50% by mass, more preferably 90% by mass, still more preferably 99% by mass. The positive active material may be composed substantially only of a lithium-(transition metal) composite oxide. When the content ratio of the lithium-(transition metal) composite oxide is increased in this manner, the energy density can be further increased while preventing the increase in the internal resistance after a charge-discharge cycle.

It is more preferred that the positive active material includes a positive active material having such a property that the positive electrode operation potential can become 4.4 V (vs. Li/Li⁺) or more at an end-of-charge voltage in the common use of the nonaqueous electrolyte energy storage device. The positive active material having such a property that the positive electrode operation potential can become 4.4 V (vs. Li/Li⁺) or more at an end-of-charge voltage in the common use of the nonaqueous electrolyte energy storage device may be a positive active material in which lithium ions can be inserted and extracted reversibly at a potential of 4.4 V (vs. Li/Li⁺) or more. Examples of the positive active material include: Li₁₊ₓ(NiαMnβCo₍₁₋α₋β₎)₁₋ₓO₂(0 < x <1, 0 ≤ α < 0.5, 0.5 < β ≤ 1, 0 ≤ 1-α-β < 0.5) that has a layered α-NaFeO₂-type crystal structure; LiNi_{0.5}Mn_{1.5}O₄ that is an example of a LiₓNiαMn₍₂₋α₎O₄ having a spinel-type crystal structure; and LiNiPO₄ LiCoPO₄, Li₂CoPO₄F, and Li₂MnSiO₄ that are examples of the polyanion compound.

The content of the positive active material in the positive electrode mix layer can be, for example, 80% by mass or more and 98% by mass or less, preferably 90% by mass or more.

In the X-ray photoelectron spectroscopic spectrum of the positive electrode mix, the upper limit of the position of the peak attributed to P2p is preferably 134 eV The lower limit of the position of the peak may be 130 eV, or may be 132 eV

The conductive agent is not particularly limited, as long as the conductive agent is a conductive material that does not adversely affect the performance of an energy storage device. Examples of the conductive agent include natural or artificial graphite, carbon black such as furnace black, acetylene black and ketjen black, a metal and a conductive ceramic, and acetylene black is preferred. Examples of the form of the conductive agent include a powdery form and a fibrous form.

Examples of the binder include: a thermoplastic resin such as a fluororesin (e.g., polytetrafluoroethylene (PTFE), poly(vinylidene fluoride) (PVDF)), polyethylene, polypropylene and polyimide; an elastomer such as an ethylene-propylene-diene rubber (EPDM), a sulfonated EPDM, a styrene butadiene rubber (SBR) and a fluororubber; and a polysaccharide polymer.

An example of the thickening agent is a polysaccharide polymer such as carboxymethyl cellulose (CMC) and methyl cellulose. In the case where the thickening agent has a functional group capable of reacting with lithium, it is preferred to deactivate the functional group by methylation or the like in advance.

The filler is not particularly limited, as long as the filler does not adversely affect the performance of an energy storage device. Examples of the main component of the filler include a polyolefin such as polypropylene and polyethylene, silica, alumina, zeolite and a glass.

### (Negative electrode)

The negative electrode includes a negative electrode base material and a negative electrode mix layer arranged on the negative electrode base material directly or with an intermediate layer interposed therebetween. The intermediate layer may have the same configuration as that of the intermediate layer in the positive electrode.

The negative electrode base material may have the same constitution as that of the positive electrode base material. As the material for the negative electrode base material, a metal such as copper, nickel, stainless steel and a nickel-plated steel or an alloy thereof can be used, and copper or a copper alloy is preferred. Namely, as the negative electrode base material, a copper foil is preferred. Examples of the copper foil include a rolled copper foil and an electrodeposited copper foil.

The negative electrode mix layer is formed from a negative electrode mix containing a negative active material. The negative electrode mix that forms the negative electrode mix layer may optionally contain an optional component such as a conductive agent, a binder, a thickening agent, a filler and a dispersing agent. As the optional component such as a conductive agent, a binder, a thickening agent, a filler and a dispersing agent, the same component as that mentioned with respect to the positive electrode mix layer can be used.

As the negative active material, a material that can absorb and release a lithium ion or the like can be used commonly. Specific examples of the negative active material include: a metal or a metalloid, such as Si and Sn; a metal oxide or a metalloid oxide such as an Si oxide and an Sn oxide; a poly(phosphoric acid) compound; and a carbon material such as graphite, non-graphite carbon (easily graphitizable carbon or hardly graphitizable carbon).

The negative electrode mix (negative electrode mix layer) may also contain: a main group non-metal element such as B, N, P, F, Cl, Br and I; a main group metal element such as Li, Na, Mg, Al, K, Ca, Zn, Ga and Ge; and a transition metal element such as Sc, Ti, V, Cr, Mn, Fe, Co, Ni, Cu, Mo, Zr, Ta, Hf, Nb and W.

### (Separator)

As the material for the separator, a woven fabric, a non-woven fabric, a porous resin film or the like can be used, for example. Among these materials, a porous resin film is preferred from the viewpoint of strength, and a non-woven fabric is preferred from the viewpoint of the retentatiblity of the nonaqueous electrolyte. As the main component for the separator, a polyolefin such as polyethylene and polypropylene is preferred from the viewpoint of strength, and a polyimide, an aramide or the like is preferred from the viewpoint of oxidative decomposition resistance. Alternatively, these resins may be combined in a composite form.

An inorganic insulation material layer may be arranged between the separator and an electrode (usually the positive electrode). The inorganic insulation material layer is a porous material layer that is also called as a "heat-resistant layer" or the like. Alternatively, a separator having such a structure that the inorganic insulation material layer is formed on one surface or both surfaces of a porous resin film may be used. The inorganic insulation material layer may be generally composed of inorganic insulation material particles and a binder, and may also contain other component. As the inorganic insulation material particles, particles of Al₂O₃, SiO₂, aluminosilicate and the like are preferred.

### (Nonaqueous electrolyte)

The nonaqueous electrolyte contains an imide salt and a nonaqueous solvent in which the imide salt is dissolved. The nonaqueous electrolyte is not limited to one having a liquid form. Namely, a nonaqueous electrolyte having a solid form and a nonaqueous electrolyte having a gel-like form are also included within the scope of the nonaqueous electrolyte.

### (Imide salt)

Examples of the imide salt include a lithium imide salt, a sodium imide salt and a potassium imide, and a lithium imide salt is preferred.

Examples of the lithium imide salt include: a lithium sulfonylimide salt such as LiN(SO₂F)₂ (lithium bis(fluorosulfonyl)imide: LiFSI), LiN(CF₃SO₂)₂ (lithium bis(trifluoromethanesulfonyl)imide: LiTFSI), LiN(C₂F₅SO₂)₂ (lithium bis(pentafluoroethanesulfonyl)imide: LiBETI), LiN(C₄F₉SO₂)₂ (lithium bis(nonafluorobutanesulfonyl)imide), CF₃-SO₂-N-SO₂-N-SO₂CF₃Li, FSO₂-N-SO₂-C₄F₉Li, CF₃-SO₂-N-SO₂-C₄F₉Li, CF₃-SO₂-N-SO₂-CF₂-SO₂-NSO₂-CF₃Li₂, F₃-SO₂-N-SO₂-CF₂-SO₃Li₂ and CF₃-SO₂-N-SO₂-CF₂-SO₂-C(-SO₂CF₃)₂Li₂; and a lithium phosphonylimide salt such as LiN(POF₂)₂ (lithium bis(difluorophosphonyl)imide: LiDFPI). These lithium imide salts may be used singly or may be used in the form of a combination of two or more of them.

The lithium imide salt preferably has a fluorine atom. Specifically, the lithium imide salt preferably has, for example, a fluorosulfonyl group, a difluorophosphonyl group, a fluoroalkyl group or the like. Among these lithium imide salts, a lithium sulfonylimide salt is preferred, LiFSI, LiTFSI and LiBETI are more preferred, and LiFSI is still more preferred. These imide salts are imide salts each of which can cause the oxidation/corrosion of aluminum relatively easily upon such charge-discharge that the operation potential of the positive electrode becomes 4.0 V (vs. Li/Li⁺) or more. Therefore, when these imide salts are used, such an advantage of the present invention that the oxidation/corrosion of aluminum upon such charge-discharge that the operation potential of the positive electrode becomes 4.0 V (vs. Li/Li⁺) or more can be prevented and the increase in the internal resistance of the nonaqueous electrolyte energy storage device after a charge-discharge cycle can be prevented can be achieved especially effectively.

The lower limit of the content of the imide salt in the nonaqueous electrolyte is, for example, preferably 0.5 mol/kg, more preferably 0.8 mol/kg. When the content of the imide salt is equal to or more than the lower limit, the charge-discharge performance can be improved. The upper limit of the content is preferably 2 mol/kg, more preferably 1.4 mol/kg, still more preferably 1.2 mol/kg, further preferably 1.1 mol/kg. When the content of the imide salt is equal to or less than the upper limit, it is expected that the increased in viscosity can be prevented and the high-rate-discharge performance or the like of the nonaqueous electrolyte energy storage device can be improved.

### (Other electrolyte salts)

In the nonaqueous electrolyte, an electrolyte salt other than the imide salt may be further contained or may not be contained. Examples of the electrolyte salt include a lithium salt, a sodium salt, a potassium salt, a magnesium salt, and an onium salt other than the imide salt. In the case where an electrolyte salt other than the imide salt is contained, the upper limit of the content of the electrolyte salt other than the imide salt in the nonaqueous electrolyte may be preferably 1 mol/kg, more preferably 0.1 mol/kg, still more preferably 0.01 mol/kg. When the content of the electrolyte salt other than the imide salt is equal to or less than the upper limit, the increase in the internal resistance after a charge-discharge cycle can be prevented effectively, and the capacity retention rate can be further improved. When the upper limit of the content of the electrolyte salt other than the imide salt in the nonaqueous electrolyte is 0.01 mol/kg, the nonaqueous electrolyte almost contains substantially no electrolyte salt other than the imide salt. The electrolyte salt other than the imide salt may be an electrolyte salt having a PF₆ anion such as LiPF₆.

In the case where LiPF₆ is used as the another electrolyte salt, a peak attributed to P2p coming from LiPF₆ appears at a position corresponding to a value more than 135 eV (generally within the range from more than 135 eV and 138 eV or less) in an X-ray photoelectron spectroscopic spectrum of the positive electrode mix. Therefore, a peak attributing to P2p coming from LiPF₆ can be distinguished from a peak attributing to P2p coming from an oxoacid of phosphorus depending on the difference in the positions of the peaks.

### (Nonaqueous solvent)

As the nonaqueous solvent, a known nonaqueous solvent which is commonly used as a nonaqueous solvent for a nonaqueous electrolyte for a conventional energy storage device can be used. Examples of the nonaqueous solvent include a carbonate (e.g., a cyclic carbonate and a linear carbonate), an ester, an ether, an amide, a sulfone, a lactone and a nitrile. Among these nonaqueous solvents, it is preferred to use at least a carbonate, and it is more preferred to use a cyclic carbonate and a linear carbonate in combination. The carbonate may be a carbonate having no substituent, or a carbonate having a substituent. Examples of the substituent include a hydroxy group and a halogen atom.

In the case where a cyclic carbonate and a linear carbonate are used in combination, the volume ratio of the cyclic carbonate and the linear carbonate (i.e., a (cyclic carbonate):(linear carbonate) ratio) is not particularly limited, and is preferably, for example, 5 : 95 or more and 50 : 50 or less. The lower limit of the content of the cyclic carbonate in the nonaqueous solvent is preferably 1% by volume, more preferably 5% by volume. The upper limit of the content of the cyclic carbonate is preferably 50% by volume, more preferably 40% by volume. The lower limit of the content of the linear carbonate in the nonaqueous solvent is preferably 20% by volume, more preferably 50% by volume. The upper limit of the content of the linear carbonate is preferably 95% by volume, more preferably 90% by volume.

Examples of the cyclic carbonate include ethylene carbonate (EC), propylene carbonate (PC), butylene carbonate (BC), vinylene carbonate (VC), vinyl ethylene carbonate (VEC), chloroethylene carbonate, fluoroethylene carbonate (FEC), diluoroethylene carbonate (DFEC), fluoromethyl ethylene carbonate, trifluoroethyl ethylene carbonate, styrene carbonate, catechol carbonate, 1-phenylvinylene carbonate and 1,2-dihenylvinylene carbonate.

Examples of the linear carbonate include diethyl carbonate (DEC), dimethyl carbonate (DMC), ethylmethyl carbonate (EMC), diphenyl carbonate, methyl trifluoroethyl carbonate (MFEC) and bis(trifluoroethyl) carbonate (FDEC).

The nonaqueous solvent preferably contains a fluorinated carbonate. Namely, the cyclic carbonate is preferably a fluorinated cyclic carbonate such as fluoroethylene carbonate, diluoroethylene carbonate, fluoromethyl ethylene carbonate and trifluoroethyl ethylene carbonate. The linear carbonate is preferably a fluorinated linear carbonate such as methyl trifluoroethyl carbonate and bis(trifluoroethyl) carbonate. The fluorinated carbonate can prevent the occurrence of a side reaction particularly at a potential of 4.0 V (vs. Li/Li⁺) or more to achieve the further improvement in the charge-discharge cycle properties, including the prevention of the increase in internal resistance after a charge-discharge cycle and the improvement in the capacity retention rate.

In the nonaqueous solvent, a fluorinated solvent other than the fluorinated carbonate can also be used. An example of the fluorinated solvent is a fluorinated ether such as 1,1,2,2-tetrafluoroethyl-2,2,3,3-tetrafluoropropyl ether and 1,1,2,2-tetrafluoroethyl-2,2,2-trifluoroethyl ether (TFEE).

The lower limit of the total content of the fluorinated solvent(s) including the fluorinated carbonate in the nonaqueous solvent is preferably 20% by volume, more preferably 50% by volume, still more preferably 80% by volume, further preferably 90% by volume, still further preferably 99% by volume. When the total content of the fluorinated solvent(s) including the fluorinated carbonate is equal to or more than the lower limit, the increase in the internal resistance after a charge-discharge cycle particularly at a potential of 4.0 V (vs. Li/Li⁺) or more can be prevented effectively and the capacity retention rate can be further improved.

In the nonaqueous electrolyte, other additive may be added. The upper limit of the content of a component other than the electrolyte salt including the imide salt and the nonaqueous solvent in the nonaqueous electrolyte may be preferably 5% by mass, more preferably 1% by mass, still more preferably 0.1% by mass.

In the nonaqueous electrolyte energy storage device, the increase in the internal resistance after such a charge-discharge cycle that the maximum reached potential of the positive electrode becomes 4.0 V (vs. Li/Li⁺) or more can be prevented, and the capacity retention rate is also is high. Therefore, it becomes possible to use the positive electrode at an operation potential of 4.0 V (vs. Li/Li⁺) or more. The lower limit of the maximum reached potential of the positive electrode of the nonaqueous electrolyte energy storage device may be, for example, 4.0 V (vs. Li/Li⁺) or 4.2 V (vs. Li/Li⁺),and is preferably 4.4 V (vs. Li/Li⁺), more preferably 4.5 V (vs. Li/Li⁺), still more preferably 4.6 V (vs. Li/Li⁺), still further preferably 4.7 V (vs. Li/Li⁺). In this manner, when the maximum reached potential of the positive electrode is high, the energy density can be increased. The upper limit of the maximum reached potential of the positive electrode is, for example, 5.4 V (vs. Li/Li⁺), and may be 5.0 V (vs. Li/Li⁺).

It is preferred that the maximum reached potential of the positive electrode is a positive electrode potential at an end-of-charge voltage of the nonaqueous electrolyte energy storage device which is employed in the conventional use of the nonaqueous electrolyte energy storage device. In general, in the case where the potential of the positive electrode becomes high frequently as the result of the repeated charge-discharge procedures, the increase in the internal resistance or the decrease in the capacity may often occur. Therefore, when the maximum reached potential of the positive electrode becomes, for example, 4.4 V (vs. Li/Li⁺) or more frequently as the result of the repeated charge-discharge procedures, the effect to prevent the increase in the internal resistance after a charge-discharge cycle and the effect to improve the capacity retention rate in the nonaqueous electrolyte energy storage device can be exerted more significantly.

### <Method for manufacturing nonaqueous electrolyte energy storage device>

The nonaqueous electrolyte energy storage device is preferably manufactured by the following method. Namely, the method for manufacturing the nonaqueous electrolyte energy storage device according to one embodiment of the present invention is a method for manufacturing a nonaqueous electrolyte energy storage device including a positive electrode including a positive electrode mix prepared using a positive electrode mix paste containing an oxoacid of phosphorus and a nonaqueous electrolyte containing an imide salt.

For example, one example of the method for manufacturing the nonaqueous electrolyte energy storage device includes:
manufacturing a positive electrode using a positive electrode mix paste containing an oxoacid of phosphorus (i.e., a positive electrode manufacture step); and
injecting a nonaqueous electrolyte containing an imide salt into a container (i.e., a nonaqueous electrolyte injection step).

### (Positive electrode manufacture step)

The positive electrode mix paste generally contains, in addition to the oxoacid of phosphorus, a positive active material and a binder, and optionally contains other components. The positive electrode mix paste can be prepared by mixing these components together. The positive electrode mix paste is applied onto the surface of a positive electrode base material and is then dried to manufacture a positive electrode having such a property that a peak attributed to P2p appears at a position corresponding to 135 eV or less in an X-ray photoelectron spectroscopic spectrum of the positive electrode mix.

The term "oxoacid of phosphorus" refers to a compound having such a structure that a hydroxy group (-OH) and an oxy group (=O) are bonded to a phosphorus atom. Examples of the oxoacid of phosphorus include phosphoric acid (H₃PO₄), phosphonic acid (H₃PO₃), phosphinic acid (H₃PO₂), pyrophosphoric acid (H₄P₂O₇) and polyphosphoric acid. Among these compounds, phosphoric acid and phosphonic acid are preferred, and phosphonic acid is more preferred. By the action of the oxoacid of phosphorus, a coating film containing a phosphorus atom can be formed on the positive electrode, and therefore, a positive electrode having such a property that a peak attributed to P2p appears at a position corresponding to 135 eV or less in an X-ray photoelectron spectroscopic spectrum of the positive electrode mix can be manufactured. If a metal salt (e.g., a lithium salt, a sodium salt, a potassium salt, a magnesium salt, a calcium salt) of an oxoacid of phosphorus or an ester of an oxoacid of phosphorus (e.g., a phosphoric acid ester, a phosphonic acid ester) is used in place of the oxoacid of phosphorus, it is impossible to manufacture a positive electrode having such a property that a peak attributed to P2p appears at a position corresponding to 135 eV or less in an X-ray photoelectron spectroscopic spectrum of a positive electrode mix, and therefore the advantageous effects of the present invention cannot be achieved.

The lower limit of the content (amount to be added) of the oxoacid of phosphorus in the positive electrode mix paste is preferably 0.05 part by mass, more preferably 0.1 part by mass, still more preferably 0.3 part by mass, relative to 100 parts by mass of the positive active material. The upper limit of the content is preferably 5 parts by mass, more preferably 3 parts by mass, still more preferably 2 parts by mass. When the content of the oxoacid of phosphorus is falls within the above-mentioned range, the increase in the internal resistance after a charge-discharge cycle can be prevented more effectively, and the capacity retention rate can be further increased.

In the positive electrode mix paste, an organic solvent is generally used as the dispersion medium. Examples of the organic solvent include: a polar solvent such as N-methyl-2-pyrrolidone (NMP), acetone and ethanol; and a non-polar solvent such as xylene, toluene and cyclohexane.

The method for applying the positive electrode mix paste is not particularly limited, and the application of the positive electrode mix paste can be carried out by a known technique, such as roller coating, screen coating and spin coating.

### (Nonaqueous electrolyte injection step)

The nonaqueous electrolyte injection step can be carried out by a known method. Namely, a nonaqueous electrolyte having a desired composition is prepared, and the prepared nonaqueous electrolyte is injected into a container.

In addition to the positive electrode manufacture step and the nonaqueous electrolyte injection step, the manufacture method may also include, for example, the following steps. For example, the manufacture method may include the steps of: manufacturing a negative electrode; laminating or winding the positive electrode and the negative electrode together with a separator interposed therebetween to form an electrode assembly in which the positive electrode and the negative electrode are overlaid alternately; and enclosing the positive electrode and the negative electrode (i.e., the electrode assembly) in the container. In general, the electrode assembly is enclosed in the container and subsequently the nonaqueous electrolyte is injected into the container. However, the order of the enclosure of the electrode assembly in the container and the injection of the electrode assembly into the container may be reversed. Subsequent to these steps, an inlet port of the container is sealed. In this manner, the nonaqueous electrolyte energy storage device can be manufactured.

### <Other embodiments>

The present invention is not limited to the above-mentioned embodiments, and can be made in aspects having various modifications and improvements, in addition to the above-mentioned aspects. For example, in the positive electrode and the negative electrode, the intermediate layer may not be provided. Alternatively, in the positive electrode of the nonaqueous electrolyte energy storage device, the positive electrode mix may not form a distinct layer. For example, the positive electrode may have, for example, such a structure that the positive electrode mix is carried on a mesh-form positive electrode base material.

In the above-mentioned embodiments, a case where the nonaqueous electrolyte secondary battery is a nonaqueous electrolyte secondary battery is mainly described. However, the nonaqueous electrolyte energy storage device may be another type of nonaqueous electrolyte energy storage device. An example of the another type of nonaqueous electrolyte energy storage device is a capacitor (e.g., an electric double-layer capacitor, a lithium ion capacitor).

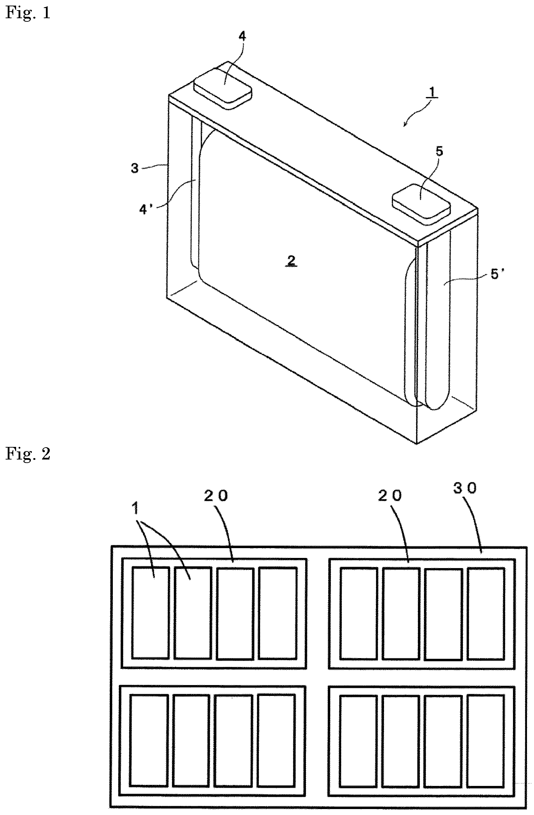

In Fig. 1, the schematic view of a nonaqueous electrolyte energy storage device 1 having a rectangular form, which is one embodiment of the nonaqueous electrolyte energy storage device of the present invention, is shown. This drawing is a perspective view of the inside of a container. In the nonaqueous electrolyte energy storage device 1 shown in Fig. 1, an electrode assembly 2 is enclosed in a container 3. The electrode assembly 2 is formed by winding a positive electrode including a positive electrode mix and a negative electrode including a negative electrode mix with a separator interposed therebetween. The positive electrode is electrically connected to a positive electrode terminal 4 through a positive electrode lead 4', and the negative electrode is electrically connected to a negative electrode terminal 5 through a negative electrode lead 5'. In the container 3, a nonaqueous electrolyte is injected.

The configuration of the nonaqueous electrolyte energy storage device according to the present invention is not particularly limited, and examples of the configuration include a cylindrical battery, a square-type battery (a rectangular battery), and a flat battery. The present invention can also be made as an energy storage apparatus equipped with a plurality of the above-mentioned nonaqueous electrolyte energy storage devices. One embodiment of the energy storage apparatus is shown in Fig. 2. In Fig. 2, an energy storage apparatus 30 is equipped with a plurality of energy storage units 20. Each of the energy storage units 20 is equipped with a plurality of nonaqueous electrolyte energy storage devices 1. The energy storage apparatus 30 can be installed as a power supply for an automobile such as an electric vehicle (EV), a hybrid electric vehicle (HEV) and a plug-in hybrid electric vehicle (PHEV).

### EXAMPLES

Hereinbelow, the present invention will be described more specifically with reference to examples. However, the present invention is not limited to the following examples.

### (Manufacture of positive electrode P1)

As a positive active material, a lithium-(transition metal) composite oxide having an α-NaFeO₂ structure and represented by Li₁₊αMe₁₋αO₂ (wherein Me represents a transition metal including Mn; 0.1 < α < 0.2; and the molar ratio of Mn to Me, i.e., Mn/Me, was a value represented by the formula: 0.5 < Mn/Me) was used. The positive active material, acetylene black (AB) that served as a conductive agent, poly(vinylidene fluoride) (PVDF) that served as a binder, and phosphonic acid (H₃PO₃) were mixed at a mixing ratio of (94-X) : 4.5 : 1.5 : X by mass in terms of solid contents using N-methyl pyrrolidone (NMP) as a dispersion medium to prepared a positive electrode mix paste. In this regard, X (the mixing amount of phosphonic acid) was 0.2 or 1. In each of the below-mentioned evaluations, there was not observed any difference between the case where X was 0.2 and the case where X was 1. The positive electrode mix paste was applied onto one surface of an aluminum foil that served as a positive electrode base material, and was then dried by heating at 100°C to form a positive electrode mix layer on the positive electrode base material. The positive electrode mix paste was also applied onto the opposite side surface of the aluminum foil, and was then dried by heating at 100°C. The positive electrode mix layer formed on the opposite side surface was detached after the drying. In this manner, a positive electrode P1 was manufactured.

### (Manufacture of positive electrode R1)

A positive electrode R1 was manufactured in the same manner as in the "manufacture of the positive electrode P1", except that phosphonic acid was not added to the positive electrode mix paste.

### (Manufacture of positive electrode P2)

As a positive active material, a lithium-(transition metal) composite oxide having an α-NaFeO₂ structure and represented by LiNi_{1/3}Co_{1/3}Mn_{1/3}O₂ was used. The positive active material, acetylene black (AB) that served as a conductive agent, poly(vinylidene fluoride) (PVDF) that served as a binder, and phosphonic acid (H₃PO₃) were mixed at a mixing ratio of 95.5 : 2 : 2 : 0.5 by mass in terms of solid contents using N-methyl pyrrolidone (NMP) as a dispersion medium to prepared a positive electrode mix paste. The positive electrode mix paste was applied onto one surface of an aluminum foil that served as a positive electrode base material, and was then dried by heating at 100°C to form a positive electrode mix layer on the positive electrode base material. The positive electrode mix paste was also applied onto the opposite side surface of the aluminum foil, and was then dried by heating at 100°C. The positive electrode mix layer formed on the opposite side surface was detached after the drying. In this manner, a positive electrode P2 was manufactured.

### (Manufacture of positive electrode R2)

A positive electrode R2 was manufactured in the same manner as in the "manufacture of the positive electrode P2", except that phosphonic acid was not added to the positive electrode mix paste.

### (Manufacture of positive electrode P3)

The same paste mix paste as that used in the manufacture of the positive electrode P2 was applied onto one surface of an aluminum foil that served as a positive electrode base material, and was then dried by heating at 100°C to form a positive electrode mix layer on the positive electrode base material. The positive electrode mix paste was also applied onto the opposite side surface of the aluminum foil, and was then dried by heating at 100°C. The positive electrode mix layer formed on the opposite side surface was detached after the drying. In this manner, a positive electrode P3 was manufactured.

### (Manufacture of positive electrode R3)

A positive electrode R3 was manufactured in the same manner as in the "manufacture of the positive electrode P3", except that phosphonic acid was not added to the positive electrode mix paste.

### (Manufacture of negative electrode)

A negative electrode was manufactured using graphite as a negative active material.

### Example 1

### (Preparation of nonaqueous electrolyte)

Lithium bis(fluorosulfonyl)imide (LiFSI) that served as an electrolyte salt was dissolved at a concentration of 1.0 mol/kg in a mixed solvent prepared by mixing fluoroethylene carbonate (FEC) with methyl trifluoroethyl carbonate (MFEC) at a volume ratio of 3 : 7 to prepare a nonaqueous electrolyte.

### (Manufacture of nonaqueous electrolyte energy storage device)

The positive electrode P1 and the negative electrode were laminated on each other with a separator that was a polyolefin-made microporous film interposed therebetween to manufacture an electrode assembly. The electrode assembly was enclosed in a container made from a metal-resin composite film, then the nonaqueous electrolyte was injected into the inside of the container, and then an opening of the container was sealed by heat sealing to manufacture a nonaqueous electrolyte energy storage device (a laminated nonaqueous electrolyte secondary battery) of Example 1.

### [Examples 2 to 6, Comparative Examples 1 to 6, Reference Examples 1 to 2]

Nonaqueous electrolyte energy storage devices of Examples 2 to 6, Comparative Examples 1 to 6 and Reference Examples 1 to 2 were manufactured in the same manner as in Example 1, except that the types of the positive electrodes and the electrolyte salts, the types of the solvents and the volume-based mixing ratios shown in Tables 1 to 3 were employed.

The solvents shown in the tables are the following compounds.
FEC: fluoroethylene carbonate
MFEC: methyl trifluoroethyl carbonate
TFEE: 1,1,2,2-tetrafluoroethyl-2,2,2-trifluoroethyl ether
EMC: ethyl methyl carbonate
EC: ethylene carbonate

### [Evaluation 1] Range of charge-discharge voltage: 4.6 to 2.0 V

### (Initial charge-discharge)

Each of the nonaqueous electrolyte energy storage devices of Examples 1 to 4, Comparative Examples 1 to 4 and Reference Examples 1 to 2 was subjected to initial charge-discharge under the following conditions. Each of the nonaqueous electrolyte energy storage devices was charged to 4.6 V at 25°C at a constant current of a charge current of 0.1 C, and was then charged at a constant voltage of 4.6 V With respect to the charge termination conditions, the charging was carried out until the charge current became 0.05 C. After the charging, a pause time of 10 minutes was provided, and then discharging was carried out to 2.0 V at 25°C at a constant current of 0.1 C.

### (X-ray photoelectron spectroscopic measurement)

Each of the nonaqueous electrolyte energy storage devices, which had been subjected to the initial charge-discharge procedure and was in a completely discharged state, was broken down in an argon atmosphere at a dew point of -60°C or lower to remove the positive electrode, and the positive electrode was washed with dimethyl carbonate, and was then dried under reduced pressure at room temperature. The positive electrode thus obtained was enclosed in a transfer vessel in an argon atmosphere, and was then introduced into a sample chamber in an X-ray photoelectron spectroscopic spectrum measurement device, and then the surface of the positive electrode mix in the positive electrode was subjected to an X-ray photoelectron spectroscopic measurement under the above-mentioned conditions. From the spectrum thus obtained, the position of a peak attributed to P2p was determined by the above-mentioned method. In each of the positive electrode mixes (P 1) of Examples 1 to 4 and Reference Example 1 in which phosphonic acid was used, a peak attributed to P2p appeared at a position located between 133 to 134 eV In each of the positive electrode mixes (R1) of Comparative Examples 1 to 4 and Reference Example 2 in which phosphonic acid was not used, a peak attributed to P2p was not observed in the range of 135 eV or less. In each of the positive electrode mixes of Reference Examples 1 and 2 in which LiPF₆ was used as the electrolyte salt, a peak attributed to P2p which came from LiPF₆ was observed at 136 eV

### (Charge-discharge cycle test)

Each of the nonaqueous electrolyte energy storage devices which had undergone the initial charge-discharge procedure was stored in a thermostat bath at 45°C for two hours, was then charged to 4.6 V at a constant current of a charge current of 1.0 C, and was then charged at a constant voltage of 4.6 V With respect to the charge termination conditions, the charging was carried out until the charge current became 0.05 C. The positive electrode potential at the time of termination of the charging (= the maximum reached potential of the positive electrode) was 4.7 V (vs. Li/Li⁺). After the charging, a pause time of 10 minutes was provided, and then discharging was carried out to 2.0 V at a constant current of 1.0 C. After the discharging, a pause time of 10 minutes was provided. The above-mentioned charging, discharging and pausing steps constituted one cycle, and the cycle was repeated 50 cycles. All of the charging, the discharging and the pausing were carried out in a thermostat bath at 45°C.

### (Internal resistance)

With respect to each of the nonaqueous electrolyte energy storage devices, the internal resistance (ACR) was measured before and after the charge-discharge cycle test by an alternate current (1 kHz) method . The ratio of the internal resistance (ACR) measured after the charge-discharge cycle test to that measured before the charge-discharge cycle test was defined as an ACR ratio, and the results of the ACR ratios are shown in Table 1.

### (Capacity retention rate)

With respect to each of the nonaqueous electrolyte energy storage devices, the ratio of the charge capacity measured on 50th cycle to that measured on 1st cycle in the above-mentioned charge-discharge cycle test was defined as a capacity retention rate (%), and the results of the capacity retention ratios are shown in Table 1.

**[Table 1]**

| | Positive electrode (Li-rich) | Electrolyte salt | Solvent (volume ratio) | Positive electrode maximum reached potential | ACR ratio | Capacity retention rate |
|---|---|---|---|---|---|---|
| | | | | V (vs. L/Li⁺) | - | % |
| Example 1 | P1 | 1.0 mol/kg LiFSI | FEC : MFEC (3 : 7) | 4.7 | 1.15 | 95.1 |
| Comparative Example 1 | R1 | 1.0 mol/kg LiFSI | FEC : MFEC (3 : 7) | 4.7 | 9.57 | 72.7 |
| Reference Example 1 | P1 | 1.0 mol/kg LiPF₆ | FEC : MFEC (3 : 7) | 4.7 | 1.23 | 92.6 |
| Reference Example 2 | R1 | 1.0 mol/kg LiPF₆ | FEC : MFEC (3 : 7) | 4.7 | 1.22 | 91.4 |
| Example 2 | P1 | 1.0 mol/kg LiFSI | FEC : MFEC (1 : 9) | 4.7 | - | 95.0 |
| Comparative Example 2 | R1 | 1.0 mol/kg LiFSI | FEC : MFEC (1 : 9) | 4.7 | - | 84.5 |
| Example 3 | P1 | 1.0 mol/kg LiFSI | FEC : MFEC : TFEE (1 : 5 : 4) | 4.7 | - | 93.2 |
| Comparative Example 3 | R1 | 1.0 mol/kg LiFSI | FEC : MFEC : TFEE (1 : 5 : 4) | 4.7 | - | 89.2 |
| Example 4 | P1 | 1.0 mol/kg LiFSI | FEC : EMC (3 : 7) | 4.7 | 2.62 | 74.5 |
| Comparative Example 4 | R1 | 1.0 mol/kg LiFSI | FEC : EMC (3 : 7) | 4.7 | 2 × 10⁸ | 4.9 |

### [Evaluation 2] Range of charge-discharge voltage: 4.35 to 2.75 V

With respect to each of the nonaqueous electrolyte energy storage devices of Example 5 and Comparative Example 5, the initial charge-discharge procedure and the charge-discharge cycle test were carried out in the same manner as in the "Evaluation 1", except that the end-of-charge voltage was adjusted to 4.35 V (the maximum reached potential of the positive electrode: 4.45 V (vs. Li/Li⁺)) and the end-of-discharge voltage was adjusted to 2.75 V After the initial charge-discharge, the X-ray photoelectron spectroscopic measurement of the surface of the positive electrode mix was carried out in the same manner as in the "Evaluation 1". In the positive electrode mix (P2) of Example 5 in which phosphonic acid was used, a peak attributed to P2p appeared between 133 and 134 eV In the positive electrode mixes (R2) of Comparative Example 5 in which phosphonic acid was not used, a peak attributed to P2p was not observed in the range of 135 eV or less. The internal resistance and the capacity retention rate were measured in the same manner as in the "Evaluation 1". The results of the measurements are shown in Table 2.

**[Table 2]**

| | Positive electrode (NCM) | Electrolyte salt | Solvent (volume ratio) | Positive electrode maximum reached potential | ACR ratio | Capacity retention rate |
|---|---|---|---|---|---|---|
| | | | | V (vs. L/Li⁺) | - | % |
| Example 5 | P2 | 1.0 mol/kg LiFSI | EC : EMC (3 : 7) | 4.45 | 1.14 | 94.8 |
| Comparative Example 5 | R2 | 1.0 mol/kg LiFSI | EC : EMC (3 : 7) | 4.45 | 2.86 | 51.6 |

### [Evaluation 3] Range of charge-discharge voltage: 4.2 to 2.75 V

With respect to each of the nonaqueous electrolyte energy storage devices of Example 6 and Comparative Example 6, the initial charge-discharge procedure and the charge-discharge cycle test were carried out in the same manner as in the "Evaluation 1", except that the end-of-charge voltage was adjusted to 4.2 V (the maximum reached potential of the positive electrode: 4.3 V (vs. Li/Li⁺)) and the end-of-discharge voltage was adjusted to 2.75 V After the initial charge-discharge, the X-ray photoelectron spectroscopic measurement of the surface of the positive electrode mix was carried out in the same manner as in the "Evaluation 1". In the positive electrode mix (P3) of Example 6 in which phosphonic acid was used, a peak attributed to P2p appeared between 133 and 134 eV In the positive electrode mixes (R3) of Comparative Example 6 in which phosphonic acid was not used, a peak attributed to P2p was not observed in the range of 135 eV or less. The internal resistance and the capacity retention rate were measured in the same manner as in the "Evaluation 1". The results of the measurements are shown in Table 3.

**[Table 3]**

| | Positive electrode (NCM) | Electrolyte salt | Solvent (volume ratio) | Positive electrode maximum reached potential | ACR ratio | Capacity retention rate |
|---|---|---|---|---|---|---|
| | | | | V (vs. L/Li⁺) | - | % |
| Example 6 | P3 | 1.0 mol/kg LiFSI | EC : EMC C3 : 7) | 4.3 | 1.03 | 97.6 |
| Comparative Example 6 | R3 | 1.0 mol/kg LiFSI | EC : EMC C3 : 7) | 4.3 | 3.12 | 97.1 |

### [Discussion]

### (Internal resistance)

As apparent from the comparison between Example 1 and Comparative Example 1 in Table 1, it is found that, in a nonaqueous electrolyte energy storage device in which a nonaqueous electrolyte contained an imide salt as an electrolyte salt, the ACR ratio is small and the increase in the internal resistance after a charge-discharge cycle is prevented by using a positive electrode P1 having such a property that a peak attributed to P2p appears at a position corresponding to 135 eV or less in an X-ray photoelectron spectroscopic spectrum of a positive electrode mix. The same tendency is also confirmed from the comparison between Example 4 and Comparative Example 4 in Table 1, the comparison between Example 5 and Comparative Example 5 in Table 2, and the comparison between Example 6 and Comparative Example 6 in Table 3. It should be noted that, in Example 1 and the like, the internal resistance after the charge-discharge cycle was decreased compared with that before the charge-discharge cycle, rather than the increase in the internal resistance associated with the charge-discharge cycle is prevented. Particularly, as demonstrated in Examples 1 and 4, it is found that, when such a charge-discharge cycle that the maximum reached potential of a positive electrode becomes 4.6 V (vs. Li/Li⁺) or more is carried out, the effect to decrease the ACR ratio and the effect to prevent the increase in the internal resistance after a charge-discharge cycle are achieved remarkably by using a positive electrode P1 having such a property that a peak attributed to P2p appears at a position corresponding to 135 eV or less in an X-ray photoelectron spectroscopic spectrum of a positive electrode mix (see Table 1). This is assumed to be because, although the oxidation/corrosion of aluminum, which is likely to be caused upon such a charge-discharge procedure that the operation potential of a positive electrode becomes 4.0 V (vs. Li/Li⁺) or more when an imide salt is used as an electrolyte salt, occurs more remarkably with the increase in the maximum reached potential of the positive electrode, the effect of a coating film derived from an oxoacid of phosphorus formed on the positive electrode mix can be exhibited regardless of the level of the maximum reached potential of the positive electrode.

On the other hand, as apparent from the comparison between Reference Examples 1 and 2 in Table 1, in the case where LiPF₆ is used as an electrolyte salt, the increase in the internal resistance after a charge-discharge cycle is not prevented and the ACR ratio (i.e., the rate of increase in the internal resistance after the charge-discharge cycle) is increased compared with that achieved in the case where a conventional positive electrode R1 is used even when a positive electrode P1 having such a property that a peak attributed to P2p appears at a position corresponding to 135 eV or less in an X-ray photoelectron spectroscopic spectrum of a positive electrode mix is used. Namely, the effect to prevent the increase in the internal resistance after a charge-discharge cycle is considered as a special effect that can be achieved only when an imide salt that serves as an electrolyte salt and each of the positive electrodes P 1 to P3 each having such a property that a peak attributed to P2p appears at a position corresponding to 135 eV or less in an X-ray photoelectron spectroscopic spectrum of a positive electrode mix are combined.

Furthermore, as apparent from the comparison between Comparative Example 1 and Reference Example 2, when a conventional positive electrode R1 is used, the ACR ratio (i.e., the rate of increase in the internal resistance after a charge-discharge cycle) is greatly increased by replacing the electrolyte salt from LiPF₆ (Reference Example 2) into an imide salt (Comparative Example 1). These results are coincident with the conventional technical knowledge that an imide salt may cause the oxidation/corrosion of aluminum upon such charge-discharge that the operation potential of a positive electrode becomes 4.0 V (vs. Li/Li⁺) or more. As mentioned above, according to the conventional technical knowledge, it has been believed that, when the electrolyte salt is replaced from LiPF₆ into an imide salt, the oxidation/corrosion of aluminum proceeds and, as a result, the rate of increase in the internal resistance after a charge-discharge cycle may be increased to no small extent. However, as apparent from the comparison between Example 1 and Comparative Example 1, it is found that, in the case of a positive electrode P1 having such a property that a peak attributed to P2p appears at a position corresponding to 135 eV or less in an X-ray photoelectron spectroscopic spectrum of a positive electrode mix, when the electrolyte salt is replaced from LiPF₆ (Reference Example 1) to an imide salt (Example 1), the ACR ratio is decreased and the increase in the internal resistance after the charge-discharge cycle is prevented. Therefore, in the case where a positive electrode having such a property that a peak attributed to P2p appears at a position corresponding to 135 eV or less in an X-ray photoelectron spectroscopic spectrum of a positive electrode mix is used, the effect to prevent the increase in the internal resistance after a charge-discharge cycle achieved by using an imide salt, which has been believed to cause the oxidation/corrosion of aluminum, as an electrolyte salt is considered to be a special effect that cannot be predicted from the conventional technical knowledge.

### (Capacity retention rate)

Attention is focused on the capacity retention rate after a charge-discharge cycle. As apparent from the comparison between Example 1 and Reference Example 1 in Table 1, when a positive electrode P1 having such a property that a peak attributed to P2p appears at a position corresponding to 135 eV or less in an X-ray photoelectron spectroscopic spectrum of a positive electrode mix is used, the capacity retention rate after a charge-discharge cycle can be improved by using an imide salt as an electrolyte salt. On the other hand, as apparent from the comparison between Comparative Example 1 and Reference Example 2, when a conventional positive electrode R1 is used, the capacity retention rate after a charge-discharge cycle is decreased by replacing the electrolyte salt from LiPF₆ (Reference Example 1) to an imide salt (Example 1), as known from the conventional technical knowledge. Namely, in the case where a positive electrode P1 having such a property that a peak attributed to P2p appears at a position corresponding to 135 eV or less in an X-ray photoelectron spectroscopic spectrum of a positive electrode mix is used, it is considered that the effect to improve the capacity retention rate after a charge-discharge cycle by using an imide salt, which is believed to cause the oxidation/corrosion of aluminum, as an electrolyte salt is a special effect that cannot be predicted from the conventional technical knowledge.

Furthermore, as shown in Examples 2 to 6, the capacity retention rate after a charge-discharge cycle can be improved by using positive electrodes P1 to P3 each having such a property that a peak attributed to P2p appears at a position corresponding to 135 eV or less in an X-ray photoelectron spectroscopic spectrum of a positive electrode mix in nonaqueous electrolyte energy storage devices each using an imide salt. This is considered to be because the oxidation/corrosion of aluminum by the action of an imide salt can be prevented by using positive electrodes P1 to P3 regardless of the compositions of the solvents, and this effect is considered to be exhibited only when an imide salt that serves an electrolyte salt and each of positive electrodes P 1 to P3 each having such a property that a peak attributed to P2p appears at a position corresponding to 135 eV or less in an X-ray photoelectron spectroscopic spectrum of a positive electrode mix are combined.

### INDUSTRIAL APPLICABILITY

The present invention can be applied to: a nonaqueous electrolyte energy storage device to be used as a power supply for an electronic device (e.g., a personal computer, a communication terminal), an automobile and the like; and others.

### DESCRIPTION OF REFERENCE SIGNS

- 1: Nonaqueous electrolyte energy storage device
- 2: Electrode assembly
- 3: Container
- 4: Positive electrode terminal
- 4': Positive electrode lead
- 5: Negative electrode terminal
- 5': Negative electrode lead
- 20: Energy storage unit
- 30: Energy storage apparatus

## Claims

1. A nonaqueous electrolyte energy storage device comprising:
a positive electrode including a positive electrode mix containing a phosphorus atom; and
a nonaqueous electrolyte containing an imide salt,
wherein a peak attributed to P2p appears at a position corresponding to 135 eV or less in an X-ray photoelectron spectroscopic spectrum of the positive electrode mix, wherein the position of said peak in the X-ray photoelectron spectroscopic spectrum is determined by a method disclosed in paragraphs [0014] and [0015] of the description.

2. The nonaqueous electrolyte energy storage device according to claim 1, wherein the peak attributed to P2p appears at a position corresponding to 134 eV or less in an X-ray photoelectron spectroscopic spectrum of the positive electrode mix.

3. The nonaqueous electrolyte energy storage device according to claim 1 or 2, wherein a content of the imide salt in the nonaqueous electrolyte is 0.5 mol/kg or more and 2 mol/kg or less.

4. The nonaqueous electrolyte energy storage device according to claim 3 , wherein the content of the imide salt in the nonaqueous electrolyte is 1.4 mol/kg or less.

5. The nonaqueous electrolyte energy storage device according to any one of claims 1 to 4, wherein the imide salt includes a lithium imide salt.

6. The nonaqueous electrolyte energy storage device according to claim 5, wherein the lithium imide salt contains at least one group selected from a fluorosulfonyl group, a difluorophosphonyl group and a fluoroalkyl group.

7. The nonaqueous electrolyte energy storage device according to claim 5 or 6, wherein the lithium imide salt includes a lithium sulfonylimide salt.

8. The nonaqueous electrolyte energy storage device according to any one of claims 1 to 4, wherein the lithium imide salt includes lithium bis(fluorosulfonyl)imide.

9. The nonaqueous electrolyte energy storage device according to any one of claims 1 to 8, wherein the nonaqueous electrolyte does not substantially contain an electrolyte salt having a PF₆ anion.

10. The nonaqueous electrolyte energy storage device according to any one of claims 1 to 9, wherein the nonaqueous electrolyte contains a fluorinated carbonate.

11. The nonaqueous electrolyte energy storage device according to any one of claims 1 to 10, wherein a maximum reached potential of the positive electrode is 4.4 V vs. Li/Li⁺ or more.

12. The nonaqueous electrolyte energy storage device according to any one of claims 1 to 11, wherein the positive electrode includes a positive electrode base material and a positive electrode mix layer and the positive electrode base material contains aluminum or an aluminum alloy.

13. The nonaqueous electrolyte energy storage device according to any one of claims 1 to 12, wherein the positive electrode mix contains a positive active material and a phosphorus atom and the positive active material contains a positive active material having such a property that the positive electrode potential can become 4.0 V vs. Li/Li⁺ or more at an end-of-charge voltage employed in the common use of the nonaqueous electrolyte energy storage device, and wherein the positive active material is a material in which lithium ions can be inserted and extracted reversibly at a potential of 4.4 V vs. Li/Li⁺ or more.

14. A method for manufacturing a nonaqueous electrolyte energy storage device according to any one claims 1 to 13 including:
a positive electrode including a positive electrode mix produced using a positive electrode mix paste containing an oxoacid of phosphorus; and
a nonaqueous electrolyte containing an imide salt.

15. The method for manufacturing a nonaqueous electrolyte energy storage device according to claim 14, wherein the oxoacid of phosphorus includes phosphoric acid or phosphonic acid.

## Patentansprüche

1. Energiespeichervorrichtung auf der Basis eines nicht-wässrigen Elektrolyten, umfassend:
eine positive Elektrode, die ein Positives-Elektroden-Gemisch aufweist, das ein Phosphoratom enthält; und
einen nicht-wässrigen Elektrolyten, der ein Imidsalz enthält,
wobei eine P2p zugeschriebene Spitze an einer Position auftritt, die 135 eV oder weniger in einem röntgenphotoelektronenspektroskopischen Spektrum des Positiven-Elektroden-Gemischs entspricht, wobei die Position der Spitze in dem röntgenphotoelektronenspektroskopischen Spektrum durch ein in den Absätzen [0014] und [0015] der Beschreibung offenbartes Verfahren bestimmt wird.

2. Energiespeichervorrichtung auf der Basis eines nicht-wässrigen Elektrolyten nach Anspruch 1, wobei die P2p zugeschriebene Spitze an einer Position auftritt, die 134 eV oder weniger in einem röntgenphotoelektronenspektroskopischen Spektrum des Positiven-Elektroden-Gemischs entspricht.

3. Energiespeichervorrichtung auf der Basis eines nicht-wässrigen Elektrolyten nach Anspruch 1 oder 2, wobei ein Gehalt des Imidsalzes in dem nicht-wässrigen Elektrolyten 0,5 mol/kg oder mehr und 2 mol/kg oder weniger beträgt.

4. Energiespeichervorrichtung auf der Basis eines nichtwässrigen Elektrolyten nach Anspruch 3, wobei der Gehalt des Imidsalzes in dem nicht-wässrigen Elektrolyt 1,4 mol/kg oder weniger beträgt.

5. Energiespeichervorrichtung auf der Basis eines nicht-wässrigen Elektrolyten nach einem der Ansprüche 1 bis 4, wobei das Imidsalz ein Lithiumimidsalz aufweist.

6. Energiespeichervorrichtung auf der Basis eines nicht-wässrigen Elektrolyten nach Anspruch 5, wobei das Lithiumimidsalz mindestens eine Gruppe enthält, die aus einer Fluorsulfonylgruppe, einer Difluorophosphonylgruppe und einer Fluoralkylgruppe ausgewählt ist.

7. Energiespeichervorrichtung auf der Basis eines nicht-wässrigen Elektrolyten nach Anspruch 5 oder 6, wobei das Lithiumimidsalz ein Lithiumsulfonylimidsalz aufweist.

8. Energiespeichervorrichtung auf der Basis eines nicht-wässrigen Elektrolyten nach einem der Ansprüche 1 bis 4, wobei das Lithiumimidsalz Lithiumbis(fluorsulfonyl)imid aufweist.

9. Energiespeichervorrichtung auf der Basis eines nicht-wässrigen Elektrolyten nach einem der Ansprüche 1 bis 8, wobei der nicht-wässrige Elektrolyt im Wesentlichen kein Elektrolytsalz mit einem PF₆-Anion enthält.

10. Energiespeichervorrichtung auf der Basis eines nicht-wässrigen Elektrolyten nach einem der Ansprüche 1 bis 9, wobei der nicht-wässrige Elektrolyt ein fluoriertes Carbonat enthält.

11. Energiespeichervorrichtung auf der Basis eines nicht-wässrigen Elektrolyten nach einem der Ansprüche 1 bis 10, wobei das maximal erreichte Potenzial der positiven Elektrode 4,4 V vs. Li/Li⁺ oder mehr beträgt.

12. Energiespeichervorrichtung auf der Basis eines nicht-wässrigen Elektrolyten nach einem der Ansprüche 1 bis 11, wobei die positive Elektrode ein Positives-Elektroden-Basismaterial und eine Positive-Elektroden-Gemischschicht aufweist und das Positive-Elektroden-Basismaterial Aluminium oder eine Aluminiumlegierung aufweist.

13. Energiespeichervorrichtung auf der Basis eines nicht-wässrigen Elektrolyten nach einem der Ansprüche 1 bis 12, wobei das Positive-Elektroden-Gemisch ein positives aktives Material und ein Phosphoratom enthält und das positive aktive Material ein positives aktives Material enthält, das eine solche Eigenschaft besitzt, dass das Positive-Elektroden-Potenzial bei einer Ladeendspannung, die bei der üblichen Verwendung der Energiespeichervorrichtung auf der Basis eines nicht-wässrigen Elektrolyten verwendet wird, 4.0 V vs. Li/Li⁺ oder mehr werden kann, und wobei das positive aktive Material ein Material ist, wo Lithiumionen bei einem Potenzial von 4,4 V vs. Li/Li⁺ oder mehr reversibel eingefügt und entfernt werden können.

14. Verfahren zur Herstellung einer Energiespeichervorrichtung auf der Basis eines nicht-wässrigen Elektrolyten nach einem der Ansprüche 1 bis 13, aufweisend:
eine positive Elektrode, die ein Positives-Elektroden-Gemisch aufweist, das unter Verwendung einer Positiven-Elektroden-Gemischpaste hergestellt wird, die eine Oxosäure von Phosphor enthält; und
einen nicht-wässrigen Elektrolyten, der ein Imidsalz enthält.

15. Verfahren zur Herstellung einer Energiespeichervorrichtung auf der Basis eines nicht-wässrigen Elektrolyten nach Anspruch 14, wobei die Oxosäure von Phosphor Phosphorsäure oder Phosphonsäure aufweist.

## Revendications

1. Dispositif de stockage d'énergie à électrolyte non aqueux, comprenant :
une électrode positive comportant un mélange d'électrode positive contenant un atome de phosphore ; et
un électrolyte non aqueux contenant un sel d'imide,
dans lequel un pic attribué à P2p apparaît à une position correspondant à 135 eV ou moins dans un spectre de spectroscopie photoélectronique à rayons X du mélange d'électrode positive, dans lequel la position dudit pic dans le spectre de spectroscopie photoélectronique à rayons X est déterminée par un procédé divulgué aux paragraphes [0014] et [0015] de la description.

2. Dispositif de stockage d'énergie à électrolyte non aqueux selon la revendication 1, dans lequel le pic attribué à P2p apparaît à une position correspondant à 134 V ou moins dans un spectre de spectroscopie photoélectronique à rayons X du mélange d'électrode positive.

3. Dispositif de stockage d'énergie à électrolyte non aqueux selon la revendication 1 ou 2, dans lequel la teneur en sel d'imide dans l'électrolyte non aqueux est de 0,5 mol/kg ou plus et de 2 mol/kg ou moins.

4. Dispositif de stockage d'énergie à électrolyte non aqueux selon la revendication 3, dans lequel la teneur en sel d'imide dans l'électrolyte non aqueux est de 1,4 mol/kg ou moins.

5. Dispositif de stockage d'énergie à électrolyte non aqueux selon l'une quelconque des revendications 1 à 4, dans lequel le sel d'imide comporte un sel d'imide de lithium.

6. Dispositif de stockage d'énergie à électrolyte non aqueux selon la revendication 5, dans lequel le sel d'imide de lithium contient au moins un groupe choisi parmi un groupe fluorosulfonyle, un groupe difluorophosphonyle et un groupe fluoroalkyle.

7. Dispositif de stockage d'énergie à électrolyte non aqueux selon la revendication 5 ou 6, dans lequel le sel d'imide de lithium comporte un sel de sulfonylimide de lithium.

8. Dispositif de stockage d'énergie à électrolyte non aqueux selon l'une quelconque des revendications 1 à 4, dans lequel le sel d'imide de lithium comporte du bis(fluorosulfonyl)imide de lithium.

9. Dispositif de stockage d'énergie à électrolyte non aqueux selon l'une quelconque des revendications 1 à 8, dans lequel l'électrolyte non aqueux ne contient pas substantiellement un sel d'électrolyte ayant un anion PF₆.

10. Dispositif de stockage d'énergie à électrolyte non aqueux selon l'une quelconque des revendications 1 à 9, dans lequel l'électrolyte non aqueux contient un carbonate fluoré.

11. Dispositif de stockage d'énergie à électrolyte non aqueux selon l'une quelconque des revendications 1 à 10, dans lequel un potentiel maximal atteint de l'électrode positive est de 4,4 V vs. Li/Li⁺ ou plus.

12. Dispositif de stockage d'énergie à électrolyte non aqueux selon l'une quelconque des revendications 1 à 11, dans lequel l'électrode positive comporte un matériau de base d'électrode positive et une couche de mélange d'électrode positive et le matériau de base d'électrode positive contient de l'aluminium ou un alliage d'aluminium.

13. Dispositif de stockage d'énergie à électrolyte non aqueux selon l'une quelconque des revendications 1 à 12, dans lequel le mélange d'électrode positive contient un matériau actif positif et un atome de phosphore et le matériau actif positif contient un matériau actif positif ayant une propriété telle que le potentiel de l'électrode positive peut atteindre 4,0 V vs. Li/Li⁺ ou plus à une tension de fin de charge employée dans l'utilisation courante du dispositif de stockage d'énergie à électrolyte non aqueux, et dans lequel le matériau actif positif est un matériau dans lequel des ions lithium peuvent être insérés et extraits de manière réversible à un potentiel de 4,4 V vs. Li/Li⁺ ou plus.

14. Procédé de fabrication d'un dispositif de stockage d'énergie à électrolyte non aqueux selon l'une quelconque des revendications 1 à 13, comportant :
une électrode positive comportant un mélange d'électrode positive produit à l'aide d'une pâte de mélange d'électrode positive contenant un oxoacide de phosphore ; et
un électrolyte non aqueux contenant un sel d'imide.

15. Procédé de fabrication d'un dispositif de stockage d'énergie à électrolyte non aqueux selon la revendication 14, dans lequel l'oxoacide de phosphore comporte l'acide phosphorique ou l'acide phosphonique.
